# EUROPÄISCHE PATENTSCHRIFT

(11) **EP 2 865 045 B1**
(45) Veröffentlichungstag und Bekanntmachung des Hinweises auf die Patenterteilung: **28.09.2016**
(21) Anmeldenummer: 13730555.3
(22) Anmeldetag: 19.06.2013
(51) Int. Cl.: H01M 12/08, H01M 8/04, G21D 9/00, F02C 6/04, H01M 10/60, F01K 23/10, F02C 6/18, C01B 3/06, C01B 3/10, F01K 23/14, F02C 6/14, G21D 1/02, H02K 7/18, H01M 10/615, H01M 10/66, H01M 10/627

(54) **KRAFTWERKSANORDNUNG MIT HOCHTEMPERATUR-SPEICHEREINHEIT**
POWER STATION ARRANGEMENT WITH HIGH TEMPERATURE STORAGE UNIT
SYSTÈME DE CENTRALE COMPORTANT UNE UNITÉ D'ACCUMULATION HAUTE TEMPÉRATURE

(30) Priorität: 14.08.2012 DE 102012214462
(43) Veröffentlichungstag der Anmeldung: 29.04.2015
(73) Patentinhaber: Siemens Aktiengesellschaft, 80333 München (DE)
(72) Erfinder: LENK, Uwe, 08064 Zwickau (DE); TREMEL, Alexander, 91052 Erlangen (DE)
(86) Internationale Anmeldenummer: PCT/EP2013/062775
(87) Internationale Veröffentlichungsnummer: WO 2014/026784

(56) Entgegenhaltungen:
- DE-A1- 10 040 655
- DE-A1-102009 057 720
- DE-A1-102012 203 665
- JP-A- H03 208 259

## Beschreibung

Die vorliegende Erfindung betrifft eine Kraftwerksanordnung umfassend eine Energieerzeugungseinheit zur Erzeugung von nutzbarer thermischer Energie sowie eine mit Wärme zu versorgende Hochtemperatur-Speichereinheit, wie auch ein Verfahren zum Betrieb einer solchen Kraftwerksanordnung.

Die in Verbindung mit einer Kraftwerksanordnung einsetzbaren Hochtemperatur-Speichereinheiten, zu denen insbesondere Metalloxid-Speichereinheiten (rechargeable metall oxide battery, ROB) zu rechnen sind, darunter insbesondere Metalloxid-Luft-Speichereinheiten (die Metall-Luft-Speichereinheiten entsprechen), erfordern bei regelmäßigem Betrieb erhöhte Betriebstemperaturen und folglich eine wenigstens zeitweise Versorgung mit thermischer Energie. Vor allem bei Metalloxid-Luft-Speichereinheiten sind mitunter Betriebstemperaturen von über 600°C erforderlich, um die erforderlichen Ionenflüsse in der Speichereinheit ausreichend verlustfrei gewährleisten zu können. Da der Aufladevorgang bei derartigen Speichereinheiten zudem endotherm verläuft, erfolgt eine Abkühlung während der Aufladung, die lediglich dadurch vermindert bzw. verhindert werden kann, dass der Speichereinheit ausreichend Wärme zugeführt wird. Ebenfalls während eines Stillstandbetriebs erfolgt eine Auskühlung durch in erster Linie Wärmeerluste, die es auszugleichen gilt. Im Gegensatz hierzu geben Hochtemperatur-Speichereinheiten jedoch während des Entladevorgangs thermische Energie ab, die während exothermen Entladevorgängen erzeugt wird und folglich abgeführt werden muss.

Hier und im Folgenden soll sich die Erfindung auf Hochtemperatur-Speichereinheiten beziehen, welche zur Speicherung bzw. Abgabe von elektrischer Kraftwerksleistung ausgebildet sind. Damit sind dies elektro-chemische Hochtemperatur-Speichereinheiten, wie etwa Metalloxid-Speichereinheiten.

Weitere sehr bevorzugte Hochtemperatur-Speichereinheiten sind NaNiCl-Speichereinheiten bzw. NaS-Speichereinheiten, die bei Temperaturen von wenigstens 200°C betrieben werden müssen. Metalloxid-Speichereinheiten, insbesondere Metalloxid-Luft-Speichereinheiten weisen typischerweise eine Betriebstemperatur von bis zu 900°C und mehr auf, so dass vorliegend die Hochtemperatur-Speichereinheiten sich durch eine Betriebstemperatur von etwa wenigstens 200° bis etwa 900°C auszeichnen. Die erfindungsgemäßen Hochtemperatur-Speichereinheiten zeichnen sich dadurch aus, dass sie dazu ausgebildet sind, elektrische Energie (elektrischen Strom) aufzunehmen und ihn etwa durch elektrochemische Reaktionen in ein geeignetes chemisches Speicherprodukt umzusetzen und zu speichern. Eine solche Speichereinheit ist bei Bedarf jedoch auch in der Lage, etwa durch eine elektrochemische Rückreaktion dieses Speicherprodukts erneut elektrische Energie (elektrischen Strom) zur Verfügung zu stellen.

Insbesondere die von der Anmelderin entwickelte Metalloxid-Luft-Speichereinheit, die etwa in der DE 10 2009 057 720 im Detail näher beschrieben wird, erfordert eine wenigstens zeitweise Versorgung mit thermischer Energie auf einem Temperaturniveau zwischen 500°C und 850°C. Gemäß dem intern bekannten Stand der Technik kann diese Wärme über die der Speichereinheit zugeführte Luft als Prozessgas zur Verfügung gestellt werden. Die Luft wird hierbei mittels einer elektrischen Heizvorrichtung thermisch konditioniert bevor sie der Speichereinheit zugeführt wird. Alternativ hierzu, bzw. zusätzlich, können auch Heizelemente innerhalb der Metalloxid-Luft-Speichereinheit vorgesehen sein, die bei Betrieb die Speichereinheit mit thermischer Energie versorgen.

Als weitere Alternative kann eine Hochtemperatur-Speichereinheit während des Ladevorganges auch bei erhöhter Ladespannung betrieben werden, wodurch die Ladestromdichte der Speichereinheit erhöht wird. Infolge der Erhöhung dieser Ladestromdichte steigt auch die ohmsche Verlustleistung während des Aufladevorgangs, die der Speichereinheit wiederum teilweise als Abwärmeleistung zur Verfügung gestellt werden kann.

Nachteilig an den vorab beschriebenen Verfahren zur Wärmeversorgung einer Hochtemperatur-Speichereinheit ist einerseits, dass die Bereitstellung der Wärmeleistung nur durch Aufwendung von zusätzlicher Energie und damit von zusätzlichen Kosten erreicht werden kann. Anderseits sind die Hochtemperatur-Speichereinheiten mitunter baulich auch so anzupassen, dass eine geeignete Wärmeversorgung überhaupt erst ermöglicht werden kann. Insbesondere eine Wärmeversorgung mittels geeigneter in die Speichereinheit integrierter Heizelemente erfordert einen hohen baulichen Aufwand.

Eine externe Versorgung einer Hochtemperatur-Batterie mit thermischer Energie wird in der nachveröffentlichten Druckschrift DE 10 2012 203 665 A1 beschrieben. Darin wird gelehrt, thermische Energie aus dem Abgasstrom einer Gasturbine mittels eines in diesem Abgasstrom angeordneten Wärmetauschers zu entnehmen. Die thermische Energie wird hierbei auf ein Fluid übertragen, welches der Hochtemperatur-Batterie zugeführt wird und damit auch die thermische Energie zur Verfügung stellen kann.

Eine alternative externe Versorgung einer Festoxidbrennstoffzelle, welche auch in umgekehrter Richtung zur Speicherung von Wasserstoff als Brennstoff betrieben werden kann, wird in der vorveröffentlichten Druckschrift JP03208259A beschrieben. Hierbei wird gelehrt, dass Wasserdampf aus einem kernkraftwerkstechnischen Dampferzeuger nach zusätzlicher Überhitzung der Brennstoffzelle zur Wärmeübertragung zugeführt werden kann.

Nachteilig an diesen aus dem Stand der Technik bekannten Lösungen ist jedoch, dass die der Hochtemperatur-Batterie oder der Festoxidbrennstoffzelle zugeführte thermische Energie mitunter keine ausreichend vorteilhafte energetische Nutzung der primären Wärmenergiequelle erlaubt. Während in der DE102012203665 A1 gelehrt wird, die thermische Energie direkt aus dem Abgasstrom einer Gasturbine zu entnehmen und diesen somit für weitere Anwendungen unvorteilhaft abzukühlen, lehrt die JP03208259A einen direkten fluidtechnischen Anschluss an einen Wasser-Dampf-Kreislauf eines Kernkraftwerks.

Bei Versorgung einer Hochtemperatur-Speichereinheit durch eine erhöhte Abwärmeleistung bei gesteigerter Ladestromdichte sind jedoch mitunter eine chemische bzw. auch physikalische Degradation der Speichereinheit zu befürchten. Zudem ist während des Aufladevorgangs unter erhöhter Aufladeleistung die Ladestromdichte im Vergleich zu der Entladestromdichte typischerweise deutlich höher, was wiederum eine geeignete Anpassung und Dimensionierung der zugehörigen elektrischen Infrastruktur erfordert.

Der vorliegenden Erfindung liegt folglich die Aufgabe zugrunde, eine geeignete Hochtemperatur-Speichereinheit zur Verwendung in Verbindung mit einer Kraftwerksanlage vorzuschlagen, die bei Betrieb die oben erwähnten Nachteile vermeidet. Insbesondere soll eine Kraftwerksanordnung mit einer Hochtemperatur-Speichereinheit vorgeschlagen werden, die einen energieeffizienten Betrieb ermöglicht. Die Hochtemperatur-Speichereinheit soll hierbei zur Speicherung bzw. Abgabe von elektrischer Kraftwerksleistung ausgebildet sein, die als Regelleistung bei Schwankungen des Stromangebots in den öffentlichen Stromversorgungsnetzwerken eingesetzt werden kann.

Erfindungsgemäß werden diese Aufgaben durch eine Kraftwerksanordnung gemäß Anspruch 1 sowie durch ein Verfahren zum Betrieb einer solchen Kraftwerksanordnung gemäß Anspruch 14 gelöst.

Insbesondere werden die der Erfindung zugrunde liegenden Aufgaben durch eine Kraftwerksanordnung gelöst, umfassend eine zur elektrischen Stromerzeugung vorgesehene Energieerzeugungseinheit, welche ebenfalls nutzbare thermische Energie auf der Grundlage von physikalischen und/oder chemischen Abläufen bereit stellt, eine für den regelmäßigen Betrieb wenigstens teilweise mit Wärme zu versorgende elektrochemische Hochtemperatur-Speichereinheit, insbesondere eine Metalloxid-Luft-Speichereinheit, sowie ein Leitungssystem zur thermischen Kopplung der Energieerzeugungseinheit mit der Hochtemperatur-Speichereinheit, wobei das Leitungssystem einen ersten Wärmetauscher umfasst, welcher dazu ausgebildet ist, einen von der Energieerzeugungseinheit mit Wärme versorgten und aus einer Dampfleitung abgezweigten Dampfstrom zur Wärmeübertragung auf einen Luftstrom nutzbar zu machen, welcher Luftstrom über das Leitungssystem der Hochtemperatur-Speichereinheit zugeführt wird.

Weiter werden die der Erfindung zugrunde liegenden Aufgaben durch ein Verfahren zum Betrieb einer Kraftwerksanordnung gelöst, umfassend eine zur elektrischen Stromerzeugung vorgesehene Energieerzeugungseinheit, welche ebenfalls nutzbare thermische Energie bereit stellt auf der Grundlage von physikalischen und/oder chemischen Abläufen, eine für den regelmäßigen Betrieb wenigstens teilweise mit Wärme zu versorgende elektrochemische Hochtemperatur-Speichereinheit, insbesondere eine Metalloxid-Luft-Speichereinheit sowie ein Leitungssystem zur thermischen Kopplung der Energieerzeugungseinheit mit der Hochtemperatur-Speichereinheit, umfassend folgende Schritte:
- Betreiben der Energieerzeugungseinheit zur Erzeugung von nutzbarer thermischer Energie;
- Übertragen wenigstens eines Teils dieser thermischen Energie auf einen Luftstrom mittels eines ersten Wärmetauschers, welcher dazu ausgebildet ist, einen von der Energieerzeugungseinheit mit Wärme versorgten und aus einer Dampfleitung abgezweigten Dampfstrom zur Wärmeübertragung auf den Luftstrom nutzbar zu machen, welcher Luftstrom über das Leitungssystem der Hochtemperatur-Speichereinheit zugeführt wird;
- Versorgung der Hochtemperatur-Speichereinheit mit dem Luftstrom.

Die der Erfindung zugrunde liegenden Aufgaben werden folglich durch eine geeignete Kraftwerksanordnung gelöst, welche neben einer Energieerzeugungseinheit zur Erzeugung von nutzbarer thermischer Energie auch eine elektrochemische Hochtemperatur-Speichereinheit umfasst, die über ein Leitungssystem mit der Energieerzeugungseinheit in vorteilhafter Weise thermisch gekoppelt ist. Durch die thermische Kopplung kann der Energieerzeugungseinheit thermische Wärme entnommen werden, die der Hochtemperatur-Speichereinheit ebenfalls als Wärme zur Verfügung gestellt werden kann.

Die erfindungsgemäße Energieerzeugungseinheit ist hierbei im Sinne eines Teils einer Kraftwerksanlage zu verstehen, welches in erster Linie eine elektrische Stromerzeugung ermöglicht. Die von der Energieerzeugungseinheit bereit gestellte Energie ist in erster Linie elektrische Energie. Lediglich als Nebenprodukt fällt etwa auch nutzbare thermische Energie an, die der Hochtemperatur-Speichereinheit zur Verfügung gestellt werden kann. Typische Energieerzeugungseinheiten sind mit Generatoren ausgestattete Gasturbinenanlagen bzw. Dampfturbinenanlagen. Hierbei ist dem Fachmann ersichtlich, dass die Energieerzeugungseinheit im physikalischen Sinne keine Energie aus dem Nichts erzeugt, sondern sie lediglich von einer Form in eine andere Form umwandelt. Die Energieerzeugung soll sich somit auf eine Bereitstellung von elektrischer Energie beziehen, wobei als Nebenprodukt thermische Energie anfällt.

Weiter sei angemerkt, dass die Energieerzeugungseinheit der Kraftwerksanordnung thermische Energie typischerweise auf Grundlage von Verbrennungsvorgängen bzw. exothermen chemischen Reaktionen zur Verfügung stellen kann. Andererseits sind jedoch auch rein physikalische Vorgänge, wie etwa nukleare Spaltungsvorgänge, zur Bereitstellung von thermischer Energie denkbar. Die Energieerzeugungseinheit kann folglich auch als nuklearer Reaktor ausgeführt sein.

Erfindungsgemäß ermöglicht also die Entnahme von Abwärme, also etwa nicht für einen Stromerzeugungsprozess genutzte thermische Energie der Energieerzeugungseinheit, die Hochtemperatur-Speichereinheit über das Leitungssystem mit Wärme zu versorgen. Eine Versorgung der Hochtemperatur-Speichereinheit etwa über elektrisch betriebene Heizelemente ist damit nicht mehr oder nicht mehr ausschließlich erforderlich, sondern die Wärmeversorgung kann durch eine direkte Entnahme von Wärmeenergie aus der Energieerzeugungseinheit erreicht werden. Durch die Entnahme der Abwärme der Energieerzeugungseinheit kann der Gesamtwirkungsgrad der Kraftwerksanordnung vorteilhaft verbessert werden.

Weiter sei darauf hingewiesen, dass das erfindungsgemäße Leitungssystem zur thermischen Kopplung typischerweise als Fluidleitungssystem ausgebildet ist. Andere Arten eines Leitungssystems, die sich zur thermischen Kopplung, also zur thermischen Leitung auch eignen, sollen von der Erfindungsidee jedoch grundsätzlich auch mit umfasst sein. Das Leitungssystem soll also in einer allgemeinen Weise verstanden werden.

Gemäß der Erfindung ist weiter vorgesehen, dass das Leitungssystem einen ersten Wärmetauscher umfasst, welcher dazu ausgebildet ist, einen von der Energieerzeugungseinheit versorgten und aus einer Dampfleitung abgezweigten Dampfstrom zur Wärmeübertragung auf einem Luftstrom nutzbar zu machen, welcher Luftstrom über das Leitungssystem der Hochtemperatur-Speichereinheit zugeführt wird. Der ausführungsgemäße Dampfstrom dient hierbei insbesondere der Energieerzeugung bzw. Energienutzung in einem Dampfprozess. Folglich dient die von der Energieerzeugungseinheit bereit gestellte thermische Energie in erster Linie der Dampfbereitung, wobei lediglich ein Teil dieser Dampfenergie für die Versorgung der Hochtemperatur-Speichereinheit mit Wärme vorgesehen wird. Dies gewährleistet eine energetisch effiziente Nutzung der thermischen Energie.

Erfindungsgemäß kann der Wärmebedarf der Hochtemperatur-Speichereinheit während des Aufladevorganges, aber auch während eines Stillstandbetriebs durch thermische Energie der Energieerzeugungseinheit gedeckt werden. Erfindungsgemäß kann der Wärmebedarf allgemein während eines regelmäßigen Betriebs gedeckt werden. Ein regelmäßiger Betrieb der Hochtemperatur-Speichereinheit umfasst hierbei alle Betriebsmodi, die für die Benutzung einer Hochtemperatur-Speichereinheit erforderlich sein können. Darunter sind insbesondere zu rechnen: Anfahrbetrieb, Lastbetrieb während eines Aufladevorgangs oder eines Entladevorgangs, Teillastbetrieb während eines Aufladevorgangs oder eines Entladevorgangs, Stillstandbetrieb, Warmehaltebetrieb, usw. Neben der bereits erwähnten Effizienzverbesserung bei Betrieb der Kraftwerksanordnung können so gleichzeitig auch Selbstentladeverluste der Hochtemperatur-Speichereinheit verringert werden, die aufgrund von Schwankungen der Betriebstemperatur die Folge wären. Zudem ist die Hochtemperatur-Speichereinheit durch die erfindungsgemäße Wärmeversorgung mitunter schneller einsatzbereit und erhöht damit die Flexibilität der Stromerzeugung der Kraftwerksanordnung.

Für die Ausführung einer thermischen Kopplung von Hochtemperatur-Speichereinheit und Energieerzeugungseinheit können ferner bereits bestehende Kraftwerkskomponenten benutzt werden, die lediglich um die Hochtemperatur-Speichereinheit und das Leitungssystem ergänzt werden müssen. So können bspw. bereits bestehende Kraftwerksanlagen zur Stromerzeugung geeignet mit einer Hochtemperatur-Speichereinheit zusammen mit einem Leitungssystem nachgerüstet werden, um diese hinsichtlich ihrer Lastflexibilität zu verbessern.

Gemäß einer ersten besonders bevorzugten Ausführungsform der Erfindung ist vorgesehen, dass das Leitungssystem wenigstens einen ersten Abschnitt aufweist, welcher dazu ausgebildet ist, die Hochtemperatur-Speichereinheit mit thermisch konditionierter Luft zu versorgen. Besonders geeignet ist diese Ausführungsform, bei Metalloxid-Luft-Speichereinheiten, die Luft als Prozessgas erfordern. So kann etwa während des Ladevorganges Sauerstoff von einem Metalloxid unter Aufnahme von elektrischer Leistung abgegeben werden, welcher etwa der die Hochtemperatur-Speichereinheit mit thermischer Wärme versorgenden Luft zugemischt werden kann. Im Gegensatz dazu kann während eines Entladevorgangs Sauerstoff aus der die Hochtemperatur-Speichereinheit mit thermischer Wärme versorgenden Luft entnommen werden, um unter Abgabe von elektrischer Leistung das als Speicherspezies vorliegende Metall zu oxidieren. Als Luft soll im Sinne der Erfindung ein Gemisch aus Stickstoff und Sauerstoff verstanden werden, welches noch weitere Gase in kleineren Anteilen enthalten kann. Der Stickstoffanteil umfasst hierbei etwa 78Vol%, wobei der Sauerstoffanteil etwa 21Vol% umfasst. Abweichungen von diesen Anteilen um bis zu etwa 20% sollen von der vorliegenden Erfindung mit umfasst sein.

Weist die der Hochtemperatur-Speichereinheit zugeführte Luft, insbesondere während des Aufladevorgangs ausreichend thermische Energie auf, so kann diese durch unmittelbaren Wärmeaustausch an die Hochtemperatur-Speichereinheit wenigstens teilweise übertragen werden. Da zudem Luft ein leicht zu handhabendes und kostengünstiges Gasgemisch darstellt, ist ausführungsgemäß eine vorteilhafte Wärmeversorgung der Metall-Speichereinheit möglich.

Gemäß einer weiteren Ausführungsform der Erfindung ist vorgesehen, dass die Energieerzeugungseinheit als Gasturbine und/oder Feststoff-Verbrennungskammer und/oder als Flugstromvergaser und/oder als Wirbelschichtvergaser und/oder als nuklearer Hochtemperaturreaktor ausgeführt ist. Die Energieerzeugungseinheit basiert folglich auf konventioneller Kraftwerkstechnologie, bei welcher neben der für den Stromerzeugungsprozess genutzten Wärme auch Abwärme freigesetzt wird, die zur vorteilhaften Wärmeversorgung der Hochtemperatur-Speichereinheit dient.

Die thermische Energie kann für die Versorgung der Hochtemperatur-Speichereinheit direkt aus dem für die Stromerzeugung vorgesehenen Kern der Energieerzeugungseinheit, etwa der Brennkammer einer Gasturbine, entnommen werden, oder aber auch aus weiteren Vorrichtungen, die mit der Energieerzeugungseinheit zur Übertragung von thermischer Energie als Einheit zusammenwirken. So wird bspw. im Falle eines Flugstromvergasers die thermische Energie für die Versorgung der Hochtemperatur-Speichereinheit nicht direkt aus dem Flugstromvergaser selbst sondern aus einem damit in Wirkverbindung stehenden Abhitzedampferzeuger entnommen.

Gemäß einer weiteren Ausführungsform der Erfindung ist vorgesehen, dass das Leitungssystem einen zweiten Wärmetauscher umfasst, welcher dazu ausgebildet ist, in der Energieerzeugungseinheit erzeugte Wärme auf einen Luftstrom zu übertragen, der der Hochtemperatur-Speichereinheit zugeführt wird. Die aus der Energieerzeugungseinheit entnommene Wärme kann an verschiedenen Stellen entnommen werden. Der zweite Wärmetauscher erlaubt hierbei eine vorteilhafte Wärmekopplung zwischen der Energieerzeugungseinheit sowie dem die Hochtemperatur-Speichereinheit versorgenden Luftstrom ohne die direkte Zufuhr von Prozessluft, die evtl. mit Verunreinigungen beladen ist.

Sollte die auf den Luftstrom mittels des zweiten Wärmetauschers übertragene Wärmeleistung nicht ausreichend sein, kann auch vorgesehen sein, dass der zweite Wärmetauscher noch eine elektrische Heizvorrichtung aufweist. Folglich kann bei Bedarf der Luftstrom noch mit zusätzlicher Wärme versorgt werden.

Gemäß einer Weiterbildung kann auch vorgesehen sein, dass der zweite Wärmetauscher dazu ausgebildet ist, über das Leitungssystem mit einem Abgasstrom aus einer Expansionsstufe einer Gasturbine und/oder mit einem aus einer Brennkammer einer Gasturbine ausgekoppelten Abgasstrom und/oder mit einem aus einer Kompressionsstufe einer Gasturbine ausgekoppelten Luftstrom zur Wärmeübertragung versorgt zu werden. Ausführungsgemäß kann einer Gasturbine an unterschiedlichen Stellen thermisch konditioniertes Fluid entnommen werden, welches zur Übertragung von Wärme in dem zweiten Wärmetauscher geeignet ist.

Gemäß einer alternativen Ausführungsform können die aus der Gasturbine abgeführten Wärmeströme auch der Hochtemperatur-Speichereinheit direkt, d.h. nicht mittelbar über den zweiten Wärmetauscher zugeführt werden. Da jedoch vielfach mit einer direkten Einleitung dieser Fluidströme in die Hochtemperatur-Speichereinheit eine Verunreinigung einhergehen kann, kann eine Verschmutzung und damit langfristig auch eine Zerstörung der Hochtemperatur-Speichereinheit nicht ausgeschlossen werden.

Gemäß einer weiteren vorteilhaften Ausführungsform der Erfindung kann vorgesehen sein, dass das Leitungssystem einen dritten Wärmetauscher umfasst, welcher dazu ausgebildet ist, einen aus der Hochtemperatur-Speichereinheit ausgetretenen Wärmestrom zur Wärmeübertragung auf einen Luftstrom nutzbar zu machen, welcher der Hochtemperatur-Speichereinheit zugeführt wird. Der aus der Hochtemperatur-Speichereinheit austretende Wärmestrom wird folglich in einer zyklischen Schaltung wieder zu einem Ort stromaufwärts in Bezug auf die Hochtemperatur-Speichereinheit geleitet, um dort den der Hochtemperatur-Speichereinheit zugeführten Luftstrom thermisch zu konditionieren. Vor allem während eines exothermen Entladevorgangs der Hochtemperatur-Speichereinheit kann so ein Wärmeverlust aus der Hochtemperatur-Speichereinheit vermindert werden.

Gemäß einer weiteren Ausführungsform ist es auch denkbar, den aus der Hochtemperatur-Speichereinheit austretenden Wärmestrom einem Dampfprozess zur Verfügung zu stellen, welcher bspw. für die Rückverstromung von thermischer Energie vorgesehen ist. So kann bspw. der Wärmestrom auch einem Abhitzedampferzeuger zugeführt werden, der von einer Dampfturbinenanlage umfasst ist. Ebenfalls kann der aus der Hochtemperatur-Speichereinheit austretende Wärmestrom einem Wärmespeicher zu einer zeitlich nachfolgenden Nutzung zugeführt werden. Aus einem solchen Speicher kann etwa während eines Ladevorgangs nachgefragte Wärmeenergie entnommen werden.

In einer vorteilhaften Weiterführung ist vorgesehen, dass der dritte Wärmetauscher zusätzlich noch mit dem zweiten Wärmetauscher wärmetechnisch gekoppelt ist. Demgemäß erfolgt eine besonders effiziente Wärmenutzung.

Gemäß einer anderen Ausführungsform der Erfindung ist vorgesehen, dass das Leitungssystem eine in Bezug auf die Hochtemperatur-Speichereinheit aufstromseitig angeordnete Einleitungsstelle umfasst, welche dazu ausgebildet ist, einen aus der Hochtemperatur-Speichereinheit ausgetretenen Luftstrom in das Leitungssystem zurückzuführen, um diesen mit dem Luftstrom zu mischen, welcher der Hochtemperatur-Speichereinheit zugeführt wird. Der aus der Hochtemperatur-Speichereinheit austretende und thermische Energie aufweisende Luftstrom wird folglich zu einer Einleitungsstelle des Leitungssystems zurückgeführt, welche aufstromseitig in Bezug auf die Hochtemperatur-Speichereinheit angeordnet ist. Durch den Mischvorgang zwischen neuer, d.h. der Hochtemperatur-Speichereinheit noch nicht zugeführter Luft und verbrauchter, d.h. bereits zugeführter Luft erfolgt eine besonders effiziente Wärmeübertragung. Diese vermindert die thermische Verlustleistung der Hochtemperatur-Speichereinheit signifikant.

Gemäß einer weiterführenden Ausführungsform kann die Dampfleitung eine Hochdruckdampfleitung sein, in welcher bei regelmäßigem Betrieb ein Druck von bis zu 300 bar vorherrscht. Derartige Hochdruckdampfleitungen sind etwa in einer gekoppelten Gas- und Dampfkraftwerksanlage vorgesehen, in welcher sie zur dampfseitigen Stromerzeugung eine Hochdruck-Dampfturbine mit Wärme versorgen. Das Temperaturniveau des in der Dampfleitung vorherrschenden Dampfes erreicht bis zu 600 °C und ist damit besonders geeignet, eine Hochtemperatur-Speichereinheit, vor allem eine Metalloxid-Luft-Speichereinheit zu versorgen, deren Betriebstemperaturen bei ähnlichen Temperaturniveaus liegen.

Gemäß einer weiteren Ausführungsform kann auch vorgesehen sein, dass die Dampfleitung mit einem Abhitzedampferzeuger einer Dampfturbinenanlage wärmetechnisch und/oder fluidtechnisch gekoppelt ist. Die Dampfleitung ist von einer Dampfturbinenanlage zur elektrischen Stromerzeugung umfasst. Alternativ kann die der Hochtemperatur-Speichereinheit zugeführte Wärme auch unmittelbar aus dem Abhitzerdampferzeuger bzw. aus von diesem umfassten Behältnissen entnommen werden. Eine solche Dampfturbinenanlage ist insbesondere von einem kombinierten Gas- und Dampfkraftwerk umfasst.

Entsprechend einem weiteren, sehr bevorzugten Aspekt kann ausführungsgemäß das Leitungssystem der Kraftwerksanordnung wenigstens einen zweiten Abschnitt aufweisen, welcher dazu ausgebildet ist, die Hochtemperatur-Speichereinheit mit thermisch konditioniertem Wasser und/oder Wasserdampf zu versorgen. Insbesondere die von der Anmelderin entwickelte Metalloxid-Luft-Speichereinheit, die auch in der DE 10 2009 057 720 beschrieben wird, erfordert eine Versorgung mit Wasserdampf. Der Wasserdampf dient hierbei vor allem als chemische Transportspezies, die Sauerstoff zwischen einer Speicherspezies (Metall und Metalloxid) sowie einer Elektrodenoberfläche transportiert. So transportiert während des Entladevorgangs bspw. das Wasser in gasförmiger Phase Sauerstoffatome von der Anodenberfläche zu der Speicherspezies Metall und oxidiert diese. Während des Ladevorgangs hingegen transportiert das gasförmige Wasser Sauerstoff von dem oxidierten Metall wieder zurück an die Elektrode. Während eines regelmäßigen Betriebs erfordert eine solche Metalloxid-Luft-Speichereinheit typischerweise eine kontinuierliche Versorgung mit Wasserdampf bzw. mit Wasserstoff, auch um Leckageverluste auszugleichen. Dieser Bedarf kann gleichzeitig mit der Bereitstellung von thermischer Energie durch das Wasser bzw. den Wasserdampf gedeckt werden.

Entsprechend einer Weiterführung dieser Ausführungsform ist vorgesehen, dass der zweite Abschnitt des Leitungssystems eine Niederdruckdampfleitung ist, in welcher bei regelmäßigem Betrieb höchstens ein Druck von 10 bar vorherrscht. Gleichzeitig weisen derartige Niederdruck-Dampfleitungen Dampf einer Temperatur von nicht mehr als 170°C auf. Folglich eignet sich eine Versorgung der Hochtemperatur-Speichereinheit durch Wasser und oder Wasserdampf aus dieser NiederdruckDampfleitung in erster Linie während des Anfahrtsbetriebes der Hochtemperatur-Speichereinheit wenn die Betriebstemperatur der Hochtemperatur-Speichereinheit noch verhältnismäßig gering ist. Werden höhere Dampftemperaturen benötigt, kann eine thermische Konditionierung (elektrische Beheizung, Wärmetausch mit heißem Fluid, etc.) des Dampfes vor Eintritt in die Speichereinheit vorgesehen sein.

Gemäß einer weiterhin geeigneten Ausführungsform ist vorgesehen, dass der zweite Abschnitt mit einem Abhitzedampferzeuger einer Dampfturbinenanlage wärmetechnisch und fluidtechnisch gekoppelt ist. Die Entnahme von Wärme bzw. Fluid kann folglich einem Abhitzedampferzeuger entnommen werden, der bevorzugt in Verbindung mit einer Dampfturbinenanlage zur Stromerzeugung eingesetzt wird.

Nachfolgend soll die Erfindung anhand einzelner Figuren im Detail erläutert werden. Hierbei ist darauf hinzuweisen, dass die Figuren als schematische Schaltansichten zu verstehen sind, die keine Einschränkung hinsichtlich einer konkreten Ausführbarkeit erlauben. Weiterhin ist darauf hinzuweisen, dass die von den in den Figuren gezeigten Ausführungsformen umfassten Merkmale für sich alleine jedoch auch in Gesamtheit mit anderen Merkmalen beansprucht werden.

Hierbei zeigen:
- Figur 1: eine schematische Schaltansicht einer ersten Ausführungsform der Erfindung;
- Figur 2: eine weitere Ausführungsform der Erfindung in schematischer Schaltansicht;
- Figur 3: eine weitere Ausführungsform der Erfindung in schematischer Schaltansicht;
- Figur 4: ein Flussdiagramm zur Veranschaulichung des erfindungsgemäßen Verfahrens zum Betrieb einer Ausführungsform der erfindungsgemäßen Kraftwerksanordnung;

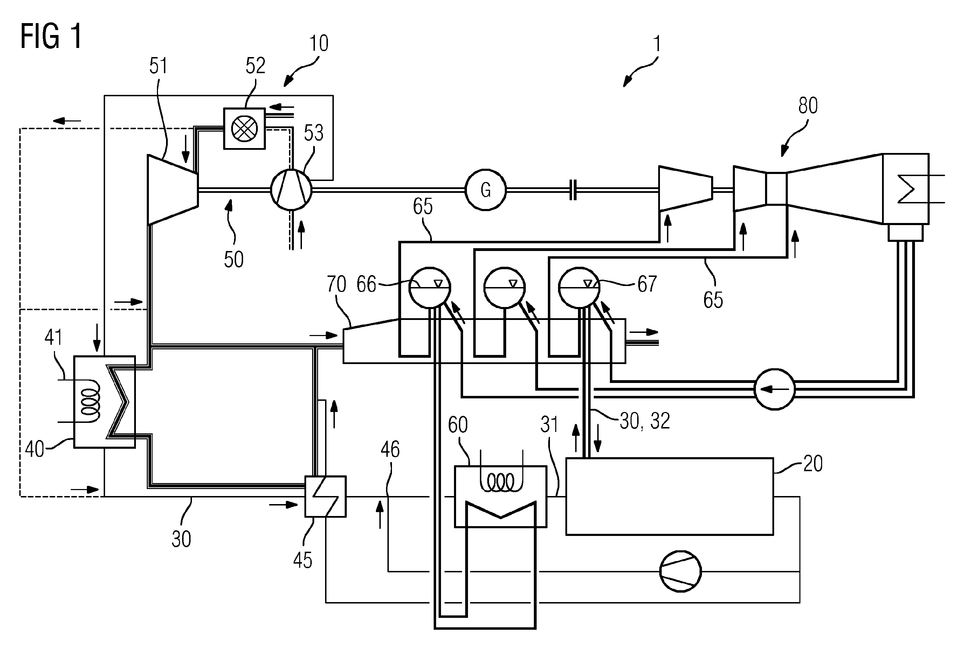

Figur 1 zeigt eine schematische Darstellung einer ersten Ausführungsform der erfindungsgemäßen Kraftwerksanordnung 1. Hierbei wird als Energieerzeugungseinheit 10 eine Gasturbine 50 umfasst, die eine Expansionsstufe 51, eine damit verbundene Brennkammer 52 sowie eine damit verbundene Kompressionsstufe 53 aufweist. Sowohl aus der Expansionsstufe 51, als auch aus der Brennkammer 52, als auch aus der Kompressionsstufe 53 können jeweils thermisch konditionierte Fluidströme entnommen werden, die einem zweiten Wärmetauscher 40 zugeführt werden. Die Zusammensetzung der jeweils entnommenen Fluidströme kann variieren. So ist bspw. der aus der Kompressionsstufe 53 entnommene Fluidstrom ein thermisch konditionierter Luftstrom. Der aus der Brennkammer 52 entnommene Fluidstrom kann wie der aus der Expansionsstufe 51 entnommene Fluidstrom als Abgasstrom auch Verbrennungsprodukte aufweisen. Die Gasturbine 50 ist mit einem Generator (gekennzeichnet durch den Buchstaben G) zur Momentübertragung gekoppelt und erlaubt bei Betrieb die Stromerzeugung mittels des Generators G.

Der zweite Wärmetauscher 40 weist eine elektrische Heizvorrichtung 41 auf, die neben der Wärmeübertragung mittels der aus der Gasturbine 50 abgeleiteten Ströme eine zusätzliche Wärmequelle bereitstellt. Der zweite Wärmetauscher 40 erlaubt die thermische Konditionierung eines von dem Leitungssystem 30 umfassten Luftstroms, welcher der Hochtemperatur-Speichereinheit 20 zugeführt wird. Die Hochtemperatur-Speichereinheit 20 ist bevorzugt als Metalloxid-Speichereinheit bzw. als Metalloxid-Luft-Speichereinheit ausgebildet. Vorliegend wird der Luftstrom der Kompressionsstufe 53 entnommen, kann jedoch auch aus der freien Umgebung bzw. anderen Luftquellen entnommen werden. Gemäß einer alternativen Ausführungsform kann auch auf eine thermische Konditionierung des Luftstromes mittels des zweiten Wärmetauschers 40 verzichtet werden.

Der zweite Wärmetauscher 40 wird von dem Leitungssystem 30 umfasst, welches zudem noch einen weiteren dritten Wärmetauscher 45 aufweist. Der dritte Wärmetauscher 45 erlaubt wiederum die thermische Konditionierung des der Hochtemperatur-Speichereinheit 20 zugeführten Luftstroms, wobei ein Wärmeübertrag erfolgt zwischen einem aus der Hochtemperatur-Speichereinheit 20 ausgetretenen Wärmestrom, welcher in das Leitungssystem 30 zurückgeführt wird. Der Wärmeübertrag mittels des dritten Wärmetauschers 45 erfolgt aufstromseitig in Bezug auf die Anordnung der Hochtemperatur-Speichereinheit 20 in dem Leitungssystem 30. Insbesondere bei Betrieb der Hochtemperatur-Speichereinheit 20 während eines Entladevorgangs kann aufgrund der in der Hochtemperatur-Speichereinheit 20 stattfindenden exothermen Reaktionen Wärme abgeführt werden, die erneut auf den der Hochtemperatur-Speichereinheit 20 zugeführten Luftstrom übertragen wird. Ebenfalls ist es ausführungsgemäß denkbar, diesen aus der Hochtemperatur-Speichereinheit 20 abgeführten Wärmestrom einem Abhitzedampferzeuger 70 einer Dampfturbinenanlage 80 zur Verfügung zu stellen. Alternativ oder ergänzend kann der aus der Hochtemperatur-Speichereinheit 20 abgeführte Wärmestrom in Form eines Fluidstroms an einer Einleitungsstelle 46 stromaufwärts in Bezug auf die Hochtemperatur-Speichereinheit 20 dem Leitungssystem 30 zugeleitet und mit dem darin befindlichen Luftstrom vermischt werden. Dies erlaubt einerseits eine Rückführung von Wärme, andererseits auch eine Einstellung der Zusammensetzung des in dem Leitungssystem 30 geleiteten Gasgemisches. Eine solche Mischung ist insofern sinnvoll, als dass der aus der Hochtemperatur-Speichereinheit 20 abgeleitete Luftstrom im Vergleich zu dem dieser Speichereinheit 20 zugeführten Luftstrom eine andere chemische Zusammensetzung aufweisen kann.

Zusätzlich ist es ausführungsgemäß vorgesehen, den in dem Leitungssystem 30 geführten Luftstrom durch einen ersten Wärmetauscher 60 thermisch zu konditionieren, welcher mit einer Dampfleitung 65 einer Hochdruckschiene 66 einer Dampfturbinenanlage 80 thermisch gekoppelt ist. Zudem weist der erste Wärmetauscher 60 eine Heizvorrichtung als externe Wärmequelle auf.

Der von dem Leitungssystem 30 zur Hochtemperatur-Speichereinheit 20 geführte Luftstrom wird durch einen ersten Abschnitt 31 des Leitungssystems 30 geführt, der dazu ausgebildet ist, die Hochtemperatur-Speichereinheit 20 mit thermisch konditionierter Luft zu versorgen. Zusätzlich weist das Leitungssystem 30 einen zweiten Abschnitt 32 auf, welcher dazu ausgebildet ist, die Hochtemperatur-Speichereinheit 20 mit thermisch konditioniertem Wasser und/oder Wasserdampf (nachfolgend unter dem Begriff Wasser zusammen gefasst) zu versorgen. Das Wasser wird hierbei von geeigneten Dampfleitungen 65 geführt, die eine gezielte Versorgung einzelner Dampfturbinen (HP, IP, LP) zur Stromerzeugung mittels eines Dampfprozesses ermöglichen. Zur Dampfbereitung steht ein Abhitzedampferzeuger 70 zur Verfügung, welcher ausführungsgemäß durch Abgas der Expansionsstufe 51 der Gasturbine 50 mit Wärme versorgt wird.

Wie oben ausgeführt, kann dem Abhitzedampferzeuger 70 Wärme zur Konditionierung des der Hochtemperatur-Speichereinheit 20 zugeführten Luftstroms mittels des ersten Wärmetauschers 60 entnommen werden. Zusätzlich ist jedoch auch eine direkte Versorgung der Hochtemperatur-Speichereinheit 20 mit Wasser denkbar, die vorliegend über den zweiten Abschnitt des Leitungssystems 30 erfolgt. Hierzu ist der zweite Abschnitt 32 mit der Niederdruckschiene 67 der Dampfleitungen 65 der Turbinenanlage 80 fluidtechnisch gekoppelt. Je nach Bedarf kann aus dieser Niederdruckschiene 67 thermisch konditioniertes Wasser zur Versorgung der Hochtemperatur-Speichereinheit 20 entnommen werden.

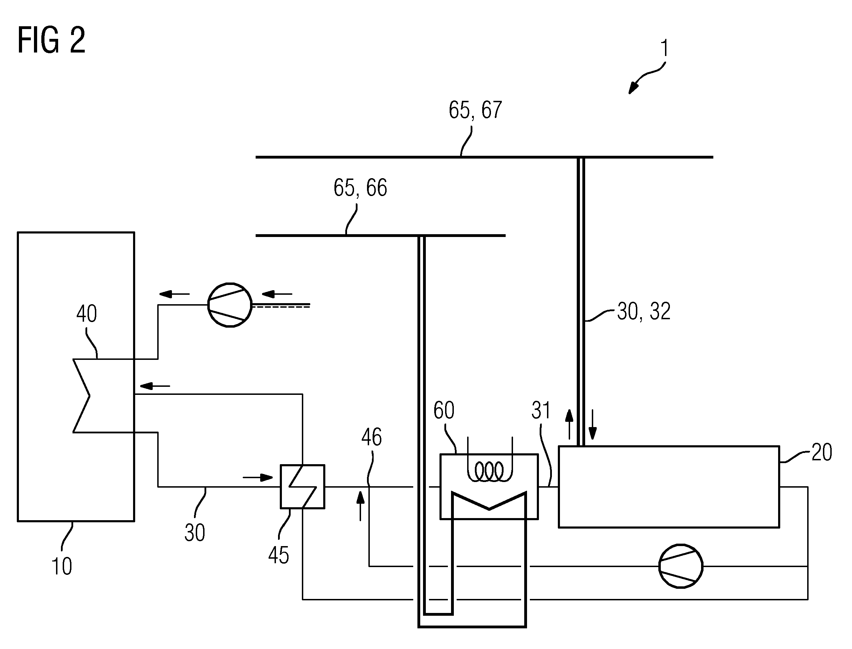

Figur 2 zeigt eine schematische Schaltansicht einer weiteren Ausführungsform der erfindungsgemäßen Kraftwerksanordnung 1. Hierbei unterscheidet sich die Kraftwerksanordnung 1 von der in Figur 1 gezeigten Kraftwerksanordnung 1 im Wesentlichen dadurch, dass die Gasturbine 50 als Energieerzeugungseinheit 10 durch eine weitere Energieerzeugungseinheit 10 ersetzt ist. Insbesondere kann diese Energieerzeugungseinheit 10 als Feststoffverbrennungskammer, als Wirbelschichtvergaser oder als nuklearer Hochtemperaturreaktor ausgeführt sein. Da die Wärmeübertragungsprinzipien in allen Ausführungsformen im Wesentlichen vergleichbar sind, wurden keine zeichnerischen Unterscheidungen getroffen. Vielmehr ist es entscheidend, dass eine Wärmeübertragung über den zweiten Wärmetauscher 40, der mit der Energieerzeugungseinheit 10 in thermischer Wirkverbindung steht, erreicht wird.

Weiterhin ist darauf hinzuweisen, dass die von Figur 2 umfassten Ausführungsformen auch Dampfleitungen 65 umfassen können, die eine geeignete Wärmeversorgung bzw. Wasserversorgung der Hochtemperatur-Speichereinheit 20 erlauben. Vorliegend wurde eine Hochdruckschiene 66 sowie eine Niederdruckschiene 67 dargestellt, jedoch sind weitere Dampfleitungen 65 auf anderen Druckniveaus auch denkbar. Eine Wärmeversorgung wie auch eine Wasserversorgung der Hochtemperatur-Speichereinheit 20 kann über das Wasser aus diesen Dampfleitungen 65 erfolgen.

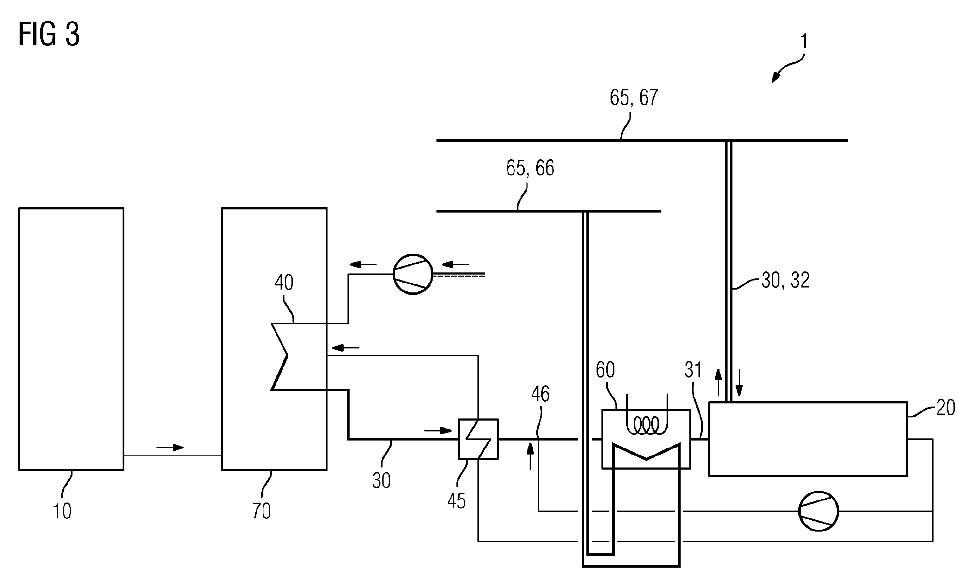

Figur 3 zeigt eine weitere Ausführungsform der erfindungsgemäßen Kraftwerksanordnung 1, welche sich von den in Figur 2 dargestellten Ausführungsformen lediglich dahingehend unterscheidet, dass die Energieerzeugungseinheit 10 als Flugstromvergaser ausgebildet ist. Da eine Integration des zweiten Wärmetauschers 40 in den Flugstromvergaser selbst technisch nicht sinnvoll ist, erfordert der Wärmeübertrag zwischen der Energieerzeugungseinheit 10 und dem zweiten Wärmetauscher 40 zunächst einen Wärmeübertrag aus dem Flugstromvergaser an einen Abhitzedampferzeuger 70. In diesem Abhitzedampferzeuger 70 befindet sich der zweite Wärmetauscher 40 angeordnet bzw. steht mit diesem in thermischer Wirkverbindung.

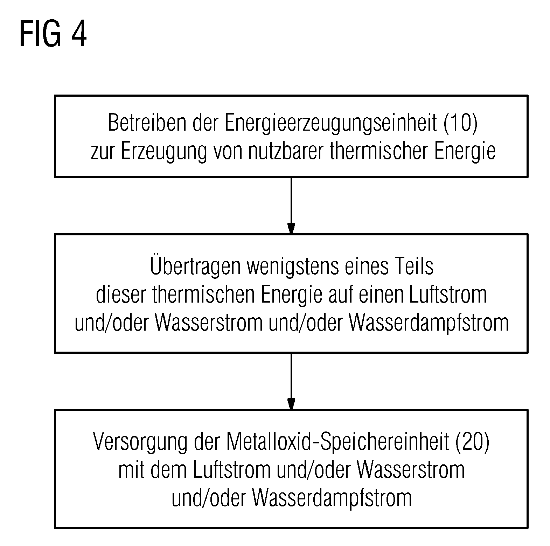

Figur 4 zeigt eine Ausführungsform des erfindungsgemäßen Verfahrens anhand eines Flussdiagramms. Ausführungsgemäß wird hierbei in einem ersten Schritt die Energieerzeugungseinheit 10 zur Erzeugung von nutzbarer thermischer Energie betrieben. Nachfolgend wird in einem weiteren Schritt wenigstens ein Teil dieser thermischen Energie auf einen Luftstrom mittels eines ersten Wärmetauschers 60, welcher dazu ausgebildet ist, einen von der Energieerzeugungseinheit 10 mit Wärme versorgten und aus einer Dampfleitung 65 abgezweigten Dampfstrom zur Wärmeübertragung auf den Luftstrom nutzbar zu machen, welcher Luftstrom über das Leitungssystem 30 der Hochtemperatur-Speichereinheit 20 zugeführt wird. In einem dritten nachfolgenden Schritt kann nun die Hochtemperatur-Speichereinheit 20 mit dem thermisch konditionierten Luftstrom versorgt werden, so dass ein Wärmeübertrag erfolgt.

Weitere Ausführungsformen ergeben sich aus den Unteransprüchen.

## Patentansprüche

1. Kraftwerksanordnung (1) umfassend eine zur elektrischen Stromerzeugung vorgesehene Energieerzeugungseinheit (10), welche ebenfalls nutzbare thermische Energie auf der Grundlage von physikalischen und/oder chemischen Abläufen bereit stellt, eine für den regelmäßigen Betrieb wenigstens teilweise mit Wärme zu versorgende elektro-chemische Hochtemperatur-Speichereinheit (20), sowie ein Leitungssystem (30) zur thermischen Kopplung der Energieerzeugungseinheit (10) mit der Hochtemperatur-Speichereinheit (20) **dadurch geken nzeichnet, dass**
das Leitungssystem (30) einen ersten Wärmetauscher (60) umfasst, welcher dazu ausgebildet ist, einen von der Energieerzeugungseinheit (10) mit Wärme versorgten und aus einer Dampfleitung (65) abgezweigten Dampfstrom zur Wärmeübertragung auf einen Luftstrom nutzbar zu machen, welcher Luftstrom über das Leitungssystem (30) der Hochtemperatur-Speichereinheit (20) zugeführt wird.

2. Kraftwerksanordnung gemäß Anspruch 1,
**dadurch gekennzeichnet, dass** das Leitungssystem (30) wenigstens einen ersten Abschnitt (31) aufweist, welcher dazu ausgebildet ist, die Hochtemperatur-Speichereinheit (20) mit thermisch konditionierter Luft zu versorgen.

3. Kraftwerksanordnung gemäß einem der vorhergehenden Ansprüche,
**dadurch gekennzeichnet, dass** die Energieerzeugungseinheit (10) als Gasturbine und/oder als Feststoffverbrennungskammer und/oder als Flugstromvergaser und/oder als Wirbelschichtvergaser und/oder nuklearer Hochtemperaturreaktor ausgeführt ist.

4. Kraftwerksanordnung gemäß einem der vorhergehenden Ansprüche,
**dadurch gekennzeichnet, dass** das Leitungssystem (30) einen zweiten Wärmetauscher (40) umfasst, welcher dazu ausgebildet ist, in der Energieerzeugungseinheit (10) erzeugte Wärme auf einen Luftstrom zu übertragen, der der Hochtemperatur-Speichereinheit (20) zugeführt wird.

5. Kraftwerksanordnung gemäß Anspruch 4,
**dadurch gekennzeichnet, dass** der zweite Wärmetauscher (40) zusätzlich noch mit einer elektrischen Heizvorrichtung (41) versehen ist.

6. Kraftwerksanordnung gemäß Anspruch 4 oder 5,
**dadurch gekennzeichnet, dass** der zweite Wärmetauscher (40) dazu ausgebildet ist, über das Leitungssystem (30) mit einem Abgasstrom aus einer Expansionsstufe (51) einer Gasturbine (50) und/oder mit einem aus einer Brennkammer (52) einer Gasturbine ausgekoppelten Abgasstrom und/oder mit einem aus einer Kompressionsstufe (53) einer Gasturbine (50) ausgekoppelten Luftstrom zur Wärmeübertragung versorgt zu werden.

7. Kraftwerksanordnung gemäß einem der vorhergehenden Ansprüche,
**dadurch gekennzeichnet, dass** das Leitungssystem (30) einen dritten Wärmetauscher (45) umfasst, welcher dazu ausgebildet ist, einen aus der Hochtemperatur-Speichereinheit (20) ausgetretenen Wärmestrom zur Wärmeübertragung auf einen Luftstrom nutzbar zu machen, welcher der Hochtemperatur-Speichereinheit (20) zugeführt wird.

8. Kraftwerksanordnung gemäß der Anspruch 7,
**dadurch gekennzeichnet, dass** der dritte Wärmetauscher (45) zusätzlich noch mit dem zweiten Wärmetauscher (40) wärmetechnisch gekoppelt ist.

9. Kraftwerksanordnung gemäß Anspruch 1,
**dadurch gekennzeichnet, dass** die Dampfleitung (65) eine Hochdruckdampfleitung ist, in welcher bei regelmäßigem Betrieb wenigstens ein Druck von 90 bar vorherrscht.

10. Kraftwerksanordnung gemäß Anspruch 1 oder 9,
**dadurch gekennzeichnet, dass** die Dampfleitung (65) mit einem Abhitzedampferzeuger (70) einer Dampfturbinenanlage (80) wärmetechnisch und/oder fluidtechnisch gekoppelt ist.

11. Kraftwerksanordnung gemäß einem der vorhergehenden Ansprüche,
**dadurch gekennzeichnet, dass** das Leitungssystem (30) wenigstens einen zweiten Abschnitt (32) aufweist, welcher dazu ausgebildet ist, die Hochtemperatur-Speichereinheit (20) mit thermisch konditioniertem Wasser und/oder Wasserdampf zu versorgen.

12. Kraftwerksanordnung gemäß der Anspruch 11,
**dadurch gekennzeichnet, dass** der zweite Abschnitt (32) eine Niederdruckdampfleitung ist, in welcher bei regelmäßigem Betrieb höchstens ein Druck von 10 bar vorherrscht.

13. Kraftwerksanordnung gemäß der Anspruch 11 oder 12,
**dadurch gekennzeichnet, dass** der zweite Abschnitt (32) mit einem Abhitzedampferzeuger (70) einer Dampfturbinenanlage (80) wärmetechnisch und/oder fluidtechnisch gekoppelt ist.

14. Verfahren zum Betrieb einer Kraftwerksanordnung (1) umfassend eine zur elektrischen Stromerzeugung vorgesehene Energieerzeugungseinheit (10), welche ebenfalls nutzbare thermische Energie bereit stellt, auf der Grundlage von physikalischen und/oder chemischen Abläufen, eine für den regelmäßigen Betrieb wenigstens teilweise mit Wärme zu versorgende elektro-chemische Hochtemperatur-Speichereinheit (20), insbesondere eine Metalloxid-Luft-Speichereinheit, sowie ein Leitungssystem (30) zur thermischen Kopplung der Energieerzeugungseinheit (10) mit der Hochtemperatur-Speichereinheit (20), umfassend folgende Schritte:
- Betreiben der Energieerzeugungseinheit (10) zur Erzeugung von nutzbarer thermischer Energie;
- Übertragen wenigstens eines Teils dieser thermischen Energie auf einen Luftstrom mittels eines ersten Wärmetauschers (60), welcher dazu ausgebildet ist, einen von der Energieerzeugungseinheit (10) mit Wärme versorgten und aus einer Dampfleitung (65) abgezweigten Dampfstrom zur Wärmeübertragung auf den Luftstrom nutzbar zu machen, welcher Luftstrom über das Leitungssystem (30) der Hochtemperatur-Speichereinheit (20) zugeführt wird;
- Versorgung der Hochtemperatur-Speichereinheit (20) mit dem Luftstrom;

## Claims

1. Power station arrangement (1) comprising an energy generating unit (10), provided for electric power generation, which also provides usable thermal energy on the basis of physical and/or chemical processes, an electrochemical high-temperature storage unit (20) which is to be supplied at least partially with heat for normal operation, and a piping system (30) for thermally coupling the energy generating unit (10) to the high-temperature storage unit (20),
**characterized in that**
the piping system (30) includes a first heat exchanger (60) which is designed for utilizing a steam flow supplied with heat by the energy generating unit (10) and tapped from a steam pipe (65) for the transfer of heat to an air flow, which air flow is fed via the piping system (30) to the high-temperature storage unit (20).

2. Power station arrangement according to Claim 1,
**characterized in that**
the piping system (30) has at least one first section (31) which is designed for supplying the high-temperature storage unit (20) with thermally conditioned air.

3. Power station arrangement according to one of the preceding claims,
**characterized in that**
the energy generating unit (10) is designed as a gas turbine and/or as a solid material combustion chamber and/or as an entrained gasifier and/or as a fluidized bed gasifier and/or as a nuclear high-temperature reactor.

4. Power station arrangement according to one of the preceding claims,
**characterized in that**
the piping system (30) includes a second heat exchanger (40) which is designed for transferring heat generated in the energy generating unit (10) to an air flow which is fed to the high-temperature storage unit (20).

5. Power station arrangement according to Claim 4,
**characterized in that**
the second heat exchanger (40) is additionally provided with an electric heating device (41).

6. Power station arrangement according to Claim 4 or 5,
**characterized in that**
the second heat exchanger (40) is designed for being supplied via the piping system (30) with an exhaust gas flow from an expansion stage (51) of a gas turbine (50) and/or with an exhaust gas flow extracted from a combustion chamber (52) of a gas turbine and/or with an air flow extracted from a compression stage (53) of a gas turbine (50) for the transfer of heat.

7. Power station arrangement according to one of the preceding claims,
**characterized in that**
the piping system (30) includes a third heat exchanger (45) which is designed for utilizing a heat flux discharged from the high-temperature storage unit (20) for the transfer of heat to an air flow which is fed to the high-temperature storage unit (20).

8. Power station arrangement according to Claim 7,
**characterized in that**
the third heat exchanger (45) is additionally thermally coupled to the second heat exchanger (40).

9. Power station arrangement according to Claim 1,
**characterized in that**
the steam pipe (65) is a high-pressure steam pipe in which at least a pressure of 90 bar prevails during normal operation.

10. Power station arrangement according to Claim 1 or 9,
**characterized in that**
the steam pipe (65) is thermally and/or fluidically coupled to a heat recovery steam generator (70) of a steam turbine plant (80).

11. Power station arrangement according to one of the preceding claims,
**characterized in that**
the piping system (30) has at least one second section (32) which is designed for supplying the high-temperature storage unit (20) with thermally conditioned water and/or steam.

12. Power station arrangement according to Claim 11,
**characterized in that**
the second section (32) is a low-pressure steam pipe in which a pressure of 10 bar at most prevails during normal operation.

13. Power station arrangement according to Claim 11 or 12,
**characterized in that**
the second section (32) is thermally and/or fluidically coupled to a heat recovery steam generator (70) of a steam turbine plant (80).

14. Method for operating a power station arrangement (1) comprising an energy generating unit (10), provided for electric power generation, which also provides usable thermal energy on the basis of physical and/or chemical processes, an electrochemical high-temperature storage unit (20), especially a metal oxide-air storage unit, which is to be at least partially supplied with heat for normal operation, and a piping system (30) for thermally coupling the energy generating unit (10) to the high-temperature storage unit (20), comprising the following steps:
- operating the energy generating unit (10) for generating usable thermal energy;
- transferring at least some of this thermal energy to an air flow by means of a first heat exchanger (60) which is designed for utilizing a steam flow supplied with heat by the energy generating unit (10) and tapped from a steam pipe (65) for the transfer of heat to an air flow, which air flow is fed via the piping system (30) to the high-temperature storage unit (20);
- supplying the high-temperature storage unit (20) with the air flow.

## Revendications

1. Agencement ( 1 ) de centrale électrique, comprenant une unité ( 10 ) de production d'énergie prévue la production de courant électrique, qui met à disposition également de l'énergie thermique utilisable sur la base de processus physiques et/ou chimiques, une unité ( 20 ) d'accumulateur électrochimique à haute thermique à alimenter, au moins en partie, par de chaleur pour avoir le fonctionnement régulier, ainsi qu'un système ( 30 ) de conduit pour le couplage thermique de l'unité ( 10 ) de production d'énergie à l'unité ( 20 ) d'accumulateur à haute température, **caractérisé en ce que**
le système ( 30 ) de conduit comprend un premier échangeur de chaleur ( 60 ), qui est constitué pour rendre utilisable, au transfert de chaleur à un courant d'air, un courant de vapeur alimenté en chaleur par l'unité ( 10 ) d'alimentation en énergie et dérivé d'un conduit ( 65 ) pour de la vapeur, lequel courant d'air est envoyé à l'unité ( 20 ) d'accumulateur à haute température par le système ( 30 ) de conduit.

2. Agencement de centrale électrique suivant la revendication 1,
**caractérisé en ce que**
le système ( 30 ) de conduit a au moins un premier tronçon ( 31 ), qui est constitué pour alimenter en air conditionné thermiquement l'unité ( 20 ) d'accumulateur à haute température.

3. Agencement de centrale électrique suivant l'une des revendications précédentes,
**caractérisé en ce que**
l'unité ( 10 ) de production d'énergie est réalisée sous la forme d'une turbine à gaz et/ou d'une chambre de combustion de matière solide et/ou d'un gazéificateur à flux entraîné et/ou d'un gazéificateur à lit fluidisé et/ou d'un réacteur nucléaire à haute température.

4. Agencement de centrale électrique suivant l'une des revendications précédentes,
**caractérisé en ce que**
le système ( 30 ) de conduit comprend un deuxième échangeur de chaleur ( 40 ), qui est constitué pour transférer à un courant d'air de la chaleur produite dans l'unité ( 10 ) de production d'énergie, lequel courant d'air est envoyé à l'unité ( 20 ) d'accumulateur à haute température.

5. Agencement de centrale électrique suivant la revendication 4,
**caractérisé en ce que**
le deuxième échangeur de chaleur ( 40 ) est pourvu supplémentairement encore d'un dispositif ( 41 ) de chauffage électrique.

6. Agencement de centrale électrique suivant la revendication 4 ou 5,
**caractérisé en ce que**
le deuxième échangeur de chaleur ( 40 ) est constitué pour être, pour le transfert de la chaleur, alimenté par un courant de gaz d'échappement d'un étage ( 51 ) de détente d'une turbine ( 50 ) à gaz et/ou par un courant de gaz d'échappement sortant d'une chambre de combustion ( 52 ) d'une turbine à gaz et/ou par un courant d'air sortant d'un étage ( 53 ) de compression d'une turbine ( 50 ) à gaz.

7. Agencement de centrale électrique suivant l'une des revendications précédentes,
**caractérisé en ce que**
le système ( 30 ) de conduit comprend un troisième échangeur de chaleur ( 45 ), qui est constitué pour rendre utilisable, au transfert de chaleur à un courant d'air, un flux de chaleur sortant de l'unité ( 20 ) d'accumulateur à haute température, lequel courant d'air est envoyé à l'unité ( 20 ) d'accumulateur à haute température.

8. Agencement de centrale électrique suivant la revendication 7,
**caractérisé en ce que**
le troisième échangeur de chaleur ( 45 ) est adjoint supplémentairement en technique de la chaleur au deuxième échangeur de chaleur ( 40 ).

9. Agencement de centrale électrique suivant la revendication 1,
**caractérisé en ce que**
le conduit ( 65 ) pour de la vapeur est un conduit pour de la vapeur sous haute pression, dans lequel règne en fonctionnement régulier au moins une pression de 90 bar.

10. Agencement de centrale électrique suivant la revendication 1 ou 9,
**caractérisé en ce que**
le conduit ( 65 ) pour de la vapeur est couplé en technique de la chaleur et/ou en technique des fluides à un générateur ( 70 ) de vapeur à récupération de la chaleur perdue d'une installation ( 80 ) de turbine à vapeur.

11. Agencement de centrale électrique suivant l'une des revendications précédentes,
**caractérisé en ce que**
le système ( 30 ) de conduit a au moins un deuxième tronçon 32, qui est constitué pour alimenter l'unité ( 20 ) d'accumulateur à haute température en de l'eau conditionnée thermiquement et/ou en vapeur d'eau.

12. Agencement de centrale électrique suivant la revendication 11,
**caractérisé en ce que**
le deuxième tronçon ( 32 ) est un conduit pour de la vapeur à basse pression, dans lequel règne en fonctionnement régulier au plus une pression de 10 bar.

13. Agencement de centrale électrique suivant la revendication 11 ou 12,
**caractérisé en ce que**
le deuxième tronçon ( 32 ) est couplé en technique de la chaleur et/ou en technique des fluides à un générateur ( 70 ) de vapeur à récupération de la chaleur perdue d'une installation ( 80 ) de turbine à vapeur.

14. Procédé pour faire fonctionner un agencement ( 1 ) de centrale électrique, comprenant une unité ( 10 ) de production d'énergie, qui met à disposition également de l'énergie thermique utilisable sur la base de processus physiques et/ou chimiques, une unité ( 20 ) d'accumulateur électrochimique à haute température à alimenter, au moins en partie, par de la chaleur pendant le fonctionnement régulier, notamment une unité d'accumulateur oxyde métallique-air, ainsi qu'un système ( 30 ) de conduit pour le couplage thermique de l'unité ( 10 ) de production d'énergie à l'unité ( 20 ) d'accumulateur à haute température, comprenant les stades suivantes :
- on fait fonctionner l'unité ( 10 ) de production d'énergie pour produire de l'énergie thermique utilisable ;
- on transfère au moins une partie de cette énergie thermique à un courant d'air au moyen d'un premier échangeur de chaleur ( 60 ), qui est constitué pour rendre utilisable, pour le transfert de chaleur au courant d'air, un courant de vapeur alimenté en chaleur par l'unité ( 10 ) de production d'énergie et dérivé d'un conduit ( 65 ) pour de la vapeur, lequel courant d'air est envoyé à l'unité ( 20 ) d'accumulateur à haute température par le système ( 30 ) de conduit ;
- on alimente l'unité ( 20 ) d'accumulateur à haute température par le courant d'air.
